Europäisches Patentamt

European Patent Office

Office européen des brevets

(19)

(11) Publication number: **0 448 500 B1**

(12) **EUROPEAN PATENT SPECIFICATION**

(45) Date of publication of patent specification: **20.12.95**    (51) Int. Cl.6: **A01B 13/08**, A01B 15/02

(21) Application number: **91500022.8**

(22) Date of filing: **07.03.91**

(54) **Device for working the land**

(30) Priority: **12.03.90 CU 4590**

(43) Date of publication of application:
**25.09.91 Bulletin 91/39**

(45) Publication of the grant of the patent:
**20.12.95 Bulletin 95/51**

(84) Designated Contracting States:
**DE DK ES FR GB IT**

(56) References cited:
**EP-A- 0 025 568**
**AU-A- 580 531**
**DE-A- 3 628 910**
**FR-A- 2 354 689**
**GB-A- 2 031 252**

(73) Proprietor: **EMPRESA IMPORTADORA, EXPOR-
TADORA Y DISTRIBUIDORA PARA LA CIEN-
CIA Y LA TECNICA TRADING AS: EMIDICT**
**Calle 16, No. 102,**
**Miramar**
**La Habana (CU)**

(72) Inventor: **Bouza Gonzalez, Heriberto**
**Calle 8, No. 39710**
**STGO. DE LAS VEGAS**
**Ciudad de la Habana (CU)**
Inventor: **Ronzoni Rebelino, Carlos Dante**
**Calle 160, No. 2**
**Alamar (Cont.) (CU)**

(74) Representative: **Gil-Vega, Victor**
**Estébanez Calderon, 3 - 5B**
**E-28020 Madrid (ES)**

Rank Xerox (UK) Business Services
(3.10/3.09/3.3.3)

## Description

This proposal for an invention relates to agriculture, in particular to implements for soil preparation, and it constitutes a device for cultivating any type of crop.

The first antecedents of this proposal for an invention are the horizontal, wide-blade hoes, designed for cultivating eroded soils without inversion of the prism and developed in the USA, Canada and the USSR in the 1950s, and the French subsoiler disclosed in FR-A-2354689 which document discloses alle the features of the preamble of claim 1. The use of these cultivators is restricted to soils with a sandy texture, low resistance to ploughing and a scant cover of vegetation, working at a shallow depth and within narrow humidity ranges.

Another implement which can be regarded as an antecedent is the winged subsoiler. The above FR-A-2354689 discloses such a winged subsoiler. As the present invention, it features a foot with a scarifying cutter fixed to its front face, and two plates or wings symmetrically attached to its sides in a V-shape configuration, said wings presenting blades for hoeing the soil. It works at a greater depth but requires elements of an active nature in order to hoe the soil, which transforms it into very complicated equipment with a marked degrading effect on the soil structure. These implements have already been tested in tropical climates and it has been demonstrated that they are not adaptable to all types of soil, which has prevented them from becoming generally used as a cultivation system, being used only in soils with a low resistance to ploughing and a low expandable clay content. The limitations of a functional nature of the implements mentioned are due to their constructional characteristics, such as the exclusive use of positive angles, the fact that the elements which penetrate and hoe the soil are not arranged in order of size and the fact that the cutting elements are located above their supports.

The objective of this proposal for an invention is to provide solutions which make it possible to cultivate without inversion of the prism with a horizontal cut, in soils of different mechanical composition and degree of compactness, within wide humidity ranges and for all types of crops.

The novelty of this proposal for an invention is the creation of a device in which elements having positive angles in dynamic equilibrium are combined with negative angles, so that the implement works in a floating position with great economy of effort and without compacting the soil.

In this device, the elements which penetrate the soil are arranged in order of size without the need for ballast, which increases the weight of the device. The horizontal cutting elements are located beneath the supports and incorporated therein, with angles which diminish in size the further away they are from the cutting zone and with greater travel in the planes of greater inclination, forming a structure which cuts and lifts the soil, which promotes its breaking-up and the rupturing of the absorbent hairs of carob species.

The support and cutting elements of this device discharge the hoed soil over their entire length without any type of obstacle, producing a constant flow of soil which is similar to the effect produced by equipments having active members.

The device will next be explained in greater detail with reference to the attached drawings, in which:

Figure 1 shows a plan view of the device.

Figures 2a and 2b are side views, on a larger scale, of the device of figure 1 seen in the sense of arrows a and b respectively.

Figure 3 is a cross-section, on a larger scale, through the line III-III in Figure 2b.

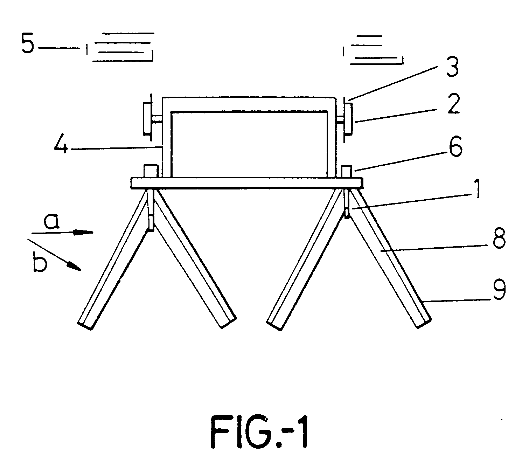

The device for cultivating the land according to Figure 1 is located at the lower end of the vertical support 1. In front of the latter, it is usual to locate working-depth-limiting wheels 2 and vertical cutting discs 3. These elements are fastened on a frame 4 such that the devices cover the external width of the wheels of the towing element 5.

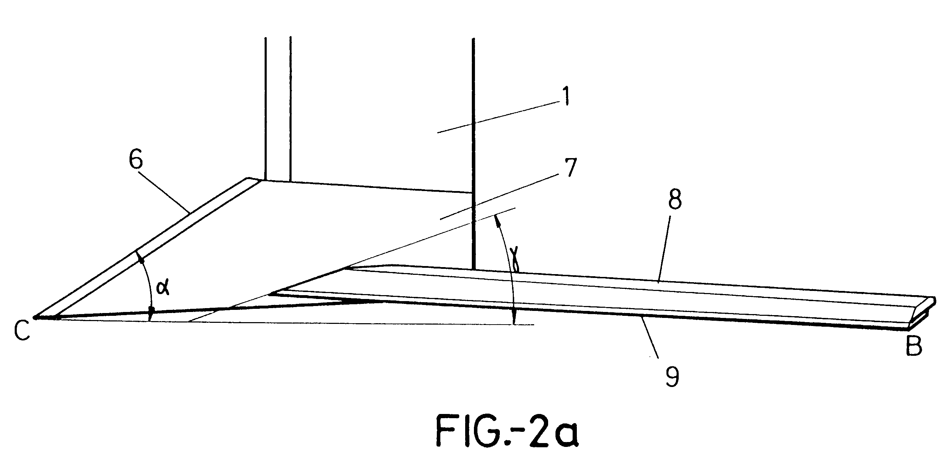

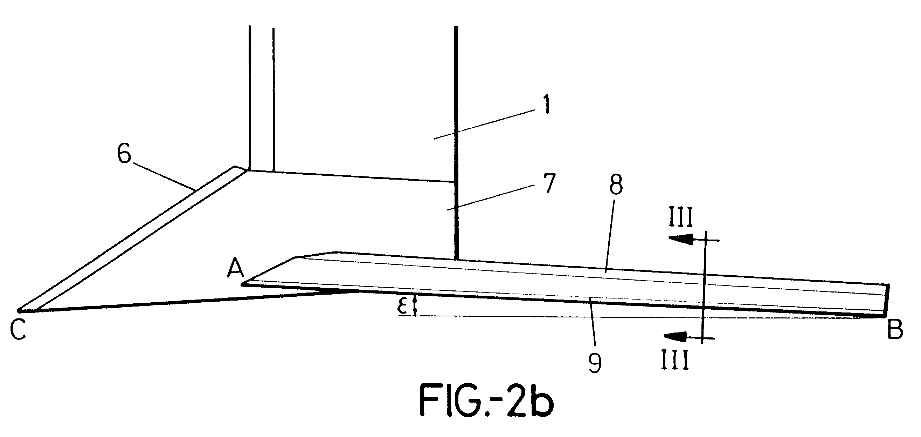

The parts making up the device, Figure 2a, are: scarifying cutter 6 with a face angle $\alpha$, scarifying foot 7, on which the cutter bears and on which the blade-holder bars 8 are fastened on both sides. As can be seen in Figure 2b, the front end A of the blade is above the rear end B and such that the line AB forms an angle $\epsilon$, called shift angle, with the soil.

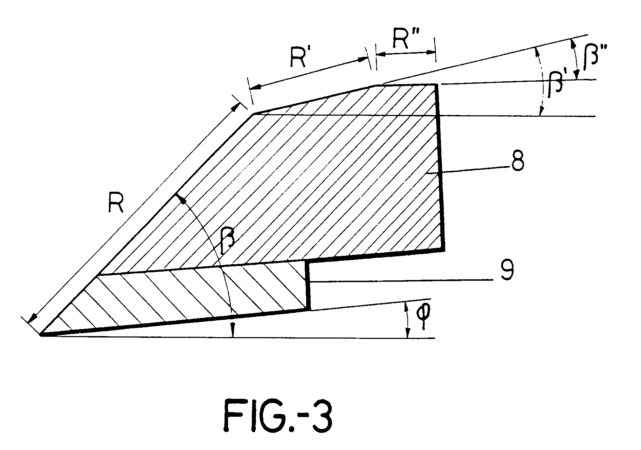

The cutting blades 9 are located beneath the bar 8 such that the line AB for cutting and shearing the soil is located in different planes. The bars and the blades have two types of angles, the face angle $\gamma$, Figure 2a, with the line of advance of the implement, and the lateral elevation angle $\beta$, Figure 3, between 40° and 50°, which have the following relationship: $\beta/2 > \gamma$, the lateral elevation angles $\beta$, $\beta'$, $\beta''$, Figure 3, and the lengths of travel R, R', R'' diminish in size the further away they are from the cutting zone, producing a trapezoidal structure in which the planes with a greater lateral elevation angle have greater travel in accordance with the following relationships:

$$\beta > \beta' > \beta'' \text{ and } R > R' > R''.$$

The horizontal cutting of the soil is facilitated by the presence of the relief angle $\Phi$, which acts over the entire length of the blade, maintaining the following relationship with respect to the face angle:

$$\gamma/\Phi = 3.1416 = \pi$$

The arrangement of the penetration angles of this device in order of size is achieved in the following manner: the face angle $\gamma$ of the blades is smaller than the face angle $\alpha$ of the cutter and this, in turn, is smaller than the angle of lateral elevation $\beta$ of said blade, such that: $\gamma < \alpha < \beta$, and therefore the penetration action into the soil is produced by the suction created by the cutter and the rear third of the bars. Once within the soil, a dynamic equilibrium is established with the negative angles (which push the device upwards), which keeps the implement in a floating position without compacting the lower layers of the soil.

The negative angle $\epsilon$ produces a shift which, together with the presence of a relief angle $\Phi$, which is fairly pronounced, facilitates the passage of the bars without producing any adherence, regardless of the moisture content and the clay mineral characteristics of the soil.

For a better understanding of what has been exposed, there follows further explanations about the different angles and one example of their values.

Face angle $\alpha$ of the scarifying cutter 6, Figure 2a. The angle that forms the cutting edge of the cutter with the line of advance of the device. This angle is situated in a plane normal to the soil and parallel to the direction of advance.

Face angle $\gamma$ of the blade and blade-holder, Figure 2a. The angle that forms the line of intersection, of the cutting plane formed by the blade and the blade-holder with the lateral part of the scarifying foot, with the soil. This angle is situated in a plane normal to the soil and parallel to the direction of advance and is the same along the blade and blade-holder when cross-sectioned by planes parallel to the direction of advance, that is to say, the face angle $\gamma$ is the facing angle of the cutting plane of the blade and blade-holder in the direction of advance.

Angle of lateral elevation $\beta$ of the blade and blade-holder, Figure 3. The angle that forms the cutting plane of the blade and blade-holder with the plane parallel to the lover part of the blade-holder that contains the cutting edge of the blade, that is to say, the lateral elevation angle $\beta$ is not in the direction of advance but in a direction normal to the lenght of the blade and blade-holder.

Shift angle $\epsilon$, Figure 2b. The angle that forms the cutting edge of the blade with the soil. It is situated in a plane normal to the soil that contains the cutting edge.

Relief angle $\Phi$, Figure 3. The angle that forms the lower surface of the blade with the plane parallel to the lower part of the blade-holder that contains the cutting edge of the blade.

The deformed and hoed material is discharged over the supports "falling" without any type of obstacles into the triangle formed by the bars. This energetic deformation takes place in the first planes for cutting and lifting the soil, since these are those having greater inclination and length of travel. Subsequently, this material is easily moved, since the inclination and lenght of travel of these planes disminishes, reducing the adhesion and friction of the soil on the bars.

The soil is hoed at greater depth without mixing the lower layers with the upper layers, leaving the larger fragments on the surface, these being broken up during subsequent working; this procedure thus favours the protection of the soil against degrading agents.

The rupture of the capillary system of roots caused by this device promotes rapid drying of the weeds and crops and leaves more than 60% of the plant debris on the surface, which protects the soil from the effects of erosion and water loss due to evaporation.

To the advantages of working without inversion of the horizontal cutting prism, which are already known, must be added the following advantages which characterize this device:

- It makes it possible to perform several actions, such as breaking-up, hoeing and subsoiling the soil, drying and incorporation of weeds and harvest debris and, in addition, cultivation work in areas which have already been sown.
- It is adapted to all types of soils of different mineralogical textural composition and resistance to ploughing, including compacted and stony soils, and it works within a wider humidity range than earlier implements.
- Its constructional simplicity and uncomplicated form achieve a very low rate of wear and breakdown, and a low production cost.
- It produces faster drying of weeds and harvest debris than all implements used hitherto in the cultivation of agricultural land.
- It is a device which can be used to prepare land, since it replaces cultivators and harrows, with the advantage that its use has a pre-emergent effect on weed development.

**Claims**

1. Device for working the land comprising a scarifying foot (7) in front of which there is a scarifying cutter (6) which cutting edge forms a face angle ($\alpha$) with the soil in the direction of advance, and two blade-holder bars (8) on both sides of the scarifying foot (7) diverging rearwards, with cutting blades (9) arranged under them, characterized in that the cutting plane formed by the blade-holder (8) and blade (9) forms a face angle ($\gamma$) with the soil in the direction of advance which is smaller than the face angle ($\alpha$) of the scarifying cutter (6), and in turn this face angle ($\alpha$) is smaller than the angle of lateral elevation ($\beta$), that forms the cutting plane formed by the cutting blade (9) and blade-holder (8) with the plane parallel to the lower part of the blade-holder (8) that contains the cutting edge of the cutting blade (9), this angle ($\beta$) being between 40° and 50°, and in that the blade-holder bars (8) are fastened to the foot (7) with a negative shift angle $\epsilon$ that forms the cutting edge of the blade with the soil, in such a manner that the scarifying cutter (6) lowerst extremity (C) and the blade-holder bars (8) lowerst extremities (B) are situated in the same horizontal plane, the cutting blades (9) and the blade-holder bars (8) forming cutting sliding planes with lateral elevation angles ($\beta$, $\beta'$, $\beta''$) and lenghts of travel (R, R', R'') which diminsih in size the further away they are from the cutting zone.

2.     Device according to claim 1, characterised in that the face angle ($\gamma$) of the blade holder bars is 3.1416 times greater than the relief angle $\Phi$ and smaller than half the angle of elevation ($\beta$) of said bars.

## Patentansprüche

1.     Vorrichtung für die Landarbeit, die einen Eggenschenkel (7) aufweist, gegenüber dem ein Auflockerungsmesser (6) mit Schneidkanten einen Spannwinkel ($\alpha$) mit dem Boden in Vorwärtsrichtung bildet, und zwei Messerhalterstangen (8) an beiden Seiten des Eggenschenkels (7), die nach hinten weisen, mit Schneidmessern (9), die unter ihnen angeordnet sind, dadurch gekennzeichnet, dass die Schneidebene, die durch den Messerhalter (8) und Messer (9) geformt wird, einen Spannwinkel ($\gamma$) mit dem Boden in Vorwärtsrichtung bildet, der kleiner ist als der Spannwinkel ($\alpha$) des Auflockerungsmessers (6) und wobei seinerseits dieser Spannwinkel ($\alpha$) kleiner ist als der Winkel der Seitenansicht ($\beta$), die die Schneidebene bildet, die durch das Schneidmesser (9) und den Messerhalter (8) mit der Ebene gebildet wird, die parallel zum untersten Teil des Messerhalters (8) liegt, der die Schneidkante des Schneidmessers (9) enthält, wobei dieser Winkel ($\beta$) zwischen 40° und 50° liegt, und dadurch gekennzeichnet, dass die Messerhalterstangen (8) am Schenkel (7) mit einem negativen Verlagerungswinkel $\epsilon$ befestigt sind, Winkel der durch die Schneidkanten mit dem Boden gebildet wird, so dass das unterste Ende (C) des Auflockerungsschneiders (6) und die untersten Enden (B) der Messerhalterstangen (8) auf derselben horizontalen Ebene liegen, wobei die Schneidmesser (9) und die Messerhalterstangen (8) Schneidgleitebenen mit Seitenansichtwinkeln ($\beta$, $\beta'$, $\beta''$) bilden und Weglängen (R, R', R'') aufweisen, die, je weiter sie von der Schneidzone entfernt sind, desto kleiner werden.

2.     Vorrichtung gemäss Patentanspruch 1, dadurch gekennzeichnet, dass der Spannwinkel ($\gamma$) der Messerhalterstangen 3,1416 mal grösser ist als der Hinterdrehwinkel $\Phi$ und kleiner als die Hälfte des Seitenansichtswinkels ($\beta$) dieser Stangen.

## Revendications

1.     Dispositif pour travailler la terre qui comprend une patte scarifieuse (7) en face de laquelle se trouve un couteau scarifieur (6) dont le bord tranchant forme un angle frontal ($\alpha$) avec la terre dans la direction avant, et deux barres porte-lames (8) sur les deux côtés de la patte scarifieuse (7) qui s'écartent vers l'arrière, avec des lames coupantes (9) disposées en dessous, caractérisé en ce que le plan de coupure formé par le porte-lames (8) et la lame (9) forme un angle frontal ($\gamma$) avec la terre dans la direction avant que est plus petit que l'angle frontal ($\alpha$) du couteau scarifieur (6) et, à son tour, cet angle frontal ($\alpha$) est plus petit que l'angle d'élévation latérale ($\beta$) que forme le plan coupant formé par la lame tranchante (9) et le porte-lames (8) avec le plan parallèle à la partie inférieure du porte-lames (8) qui contient le bord tranchant de la lame tranchante (9), cet angle ($\beta$) se trouvant entre 40° et 50°, et en ce que les barres du porte-lames (8) sont fixées à la patte (7) avec un angle de déplacement négatif que forme le bord tranchant de la lame avec la terre, de telle sorte que l'extrémité inférieure (C) du couteau scarifieur (6) et les extrémités inférieures (B) des barres du porte-lames (8) soient situées sur le même plan horizontal, les lames tranchantes (9) et les barres du porte-lames (8) formant des plans coulissants coupants avec les angles d'élévation latérale ($\beta$, $\beta'$, $\beta''$) et les longueurs de course (R, R', R'') dont les dimensions diminuent à mesure qu'ils s'éloignent de la zone coupante.

2.     Dispositif selon la Reivindication 1, caractérisé en ce que l'angle frontal ($\gamma$) des barres du porte-lames est 3,1416 fois supérieur à l'angle d'incidence Φ et inférieur à la moitié de l'angle d'élévation ($\beta$) de ces barres.

FIG.-1

FIG.-2a

FIG.-2b

FIG.-3